# EUROPEAN PATENT APPLICATION

(11) **EP 3 792 162 A1**
(43) Date of publication of application: **17.03.2021**
(21) Application number: 19207880.6
(22) Date of filing: 08.11.2019
(51) Int. Cl.: B62D 35/02, B62D 37/02, B62D 35/00

(54) **TRANSLATIONAL ACTIVE DIFFUSER FOR VEHICLE**

(30) Priority: 10.09.2019 CN 201910854174; 10.09.2019 CN 201921501167 U
(71) Applicant: Yanfeng Plastic Omnium Automotive Exterior Systems Co., Ltd., Shanghai 201805 (CN); Compagnie Plastic Omnium, 69007 Lyon (FR)
(72) Inventor: ZHANG, Chen, SHANGHAI, 201805 (CN); GUI, Xiaogang, SHANGHAI, 201805 (CN); XU, Jie, SHANGHAI, 201805 (CN); LIN, Miaotian, SHANGHAI, 201805 (CN)
(74) Representative: LLR

(57) **Abstract**

A translational active diffuser (100) for vehicle, comprising a diffuser bracket (1) immovably fixed relative to a vehicle body, an electrical motor (2) fixed on the diffuser bracket and a gear (4) driven by the electrical motor, characterized in that it further comprises a diffuser inner plate (7) provided with a rack (71) meshing with the gear, wherein the diffuser inner plate performs, under the driving of the electrical motor, a translation motion relative to the diffuser bracket along a length direction of the vehicle body, to form an airflow channel for air to flow between the diffuser inner plate and the diffuser bracket.

## Description

### Technical Field

The present invention relates to the field of vehicles, and specifically, to a translational active diffuser for vehicle.

### Background of the Invention

Currently, the problem of environmental pollution becomes more severe, and the national policy imposes stricter requirements on the environment. Vehicles are required to reduce CO₂ emissions. With the increase of the use costs of vehicles, consumers also urgently want to reduce the fuel consumption of vehicles.

To improve aerodynamic performance of the entire vehicle, increase air flow efficiency at the bottom of a vehicle and meet requirements of emission regulations, currently, several measures are mainly taken: reducing a weight of the entire vehicle, reducing rolling resistance or using electric vehicles. However, all these measures more or less cause some adverse consequences. The problem of reducing a weight of the entire vehicle is that the stability of the entire vehicle is not enough and the safety of the vehicle is reduced. The problem of reducing rolling resistance is the increase of tire costs. Although electric vehicles solve the problem of environmental pollution, traveling distance is limited due to the lack of mature technologies.

### Summary of the Invention

An objective of the present invention is to provide a translational active diffuser for vehicle, to cope with the problem of environmental pollution caused by massive CO₂ emissions from vehicles and the problem of excessive fuel consumption of vehicles in the prior art.

To cope with the foregoing technical problems, the present invention uses the following technical solutions:
A translational active diffuser for vehicle is provided, which comprises a diffuser bracket immovably fixed relative to a vehicle body, an electrical motor fixed on the diffuser bracket and a gear driven by the electrical motor, characterized in that it further comprises a diffuser inner plate provided with a rack meshing with the gear, wherein the diffuser inner plate performs, under the driving of the electrical motor, a translation motion relative to the diffuser bracket along a length direction of the vehicle body, to form an airflow channel for air to flow between the diffuser inner plate and the diffuser bracket.

Preferably, the translational active diffuser for vehicle further comprises a guiding mechanism which has two parts provided on the diffuser bracket and the diffuser inner plate relatively, the two parts cooperating with each other to provide a direction guiding for the translation motion.

Preferably, in the translational active diffuser for vehicle according to the invention, the guiding mechanism comprises a guide rail assembly which comprises: a plurality of guide rail upper supports mounted on the diffuser bracket, and a plurality of guide rail lower supports mounted on the diffuser inner plate.

Preferably, in the translational active diffuser for vehicle according to the invention, the guide rail upper supports form a first C-shaped structure having a C-shaped cross sectional shape, and the guide rail lower supports form a second C-shaped structure embedded into the first C-shaped structure and capable of sliding along the first C-shaped structure.

Preferably, in the translational active diffuser for vehicle according to the invention, on matching surfaces of the first C-shaped structure with the second C-shaped structure are provided ribs.

Preferably, in the translational active diffuser for vehicle according to the invention, the guiding mechanism comprises slots provided on the diffuser bracket and lugs provided on the diffuser inner plate, the lugs being embedded into the slots and capable of sliding along the slots.

Preferably, in the translational active diffuser for vehicle according to the invention, the slots are arranged in pairs on the diffuser bracket, and the lugs are arranged symmetrically on the diffuser inner plate.

Preferably, in the translational active diffuser for vehicle according to the invention, the guiding mechanism comprises T-shaped plates mounted on the diffuser inner plate and limiting holes provided on the diffuser bracket, the limiting holes being fitted with the T-shaped plates, and an extension direction of the limiting holes being consistent with a direction of the translation motion.

It should be understood that in the context of the invention, the above mentioned structure of upper and lower supports of guide rail, the above mentioned structure of slots and lugs and the above-mentioned structure of T-shaped plates and limiting holes could be adopted individually or in any appropriate combination, as a function of actual requirements.

Preferably, the translational active diffuser for vehicle according to the invention further comprises a fender assembled on the diffuser inner plate, and realizes synchronous movement of the fender with the diffuser inner plate.

Preferably, the translational active diffuser for vehicle according to the invention further comprises a cover plate of the electrical motor used for mounting the electrical motor on the diffuser bracket.

The translational active diffuser for vehicle provided according to the invention adopts an electrical motor driven mechanism with meshing of the gear with the rack, and realizes a translation motion of the inner plate moving along the length direction of the vehicle body and relative to the diffuser bracket. When the vehicle runs at a relatively high speed, by means of being manually or automatically turned on, an airflow channel for air to flow is formed between the diffuser inner plate and the diffuser bracket, so as to improve aerodynamic performance of the entire vehicle, reduce fuel consumption and CO₂ emissions to meet the requirements of emission regulations, and in the meanwhile ensure the streamline of the bottom of the entire vehicle in a non-running state. The diffuser thus has both practical and aesthetic functions, and also avoids the hidden danger problem brought about by energy saving and emission reduction gained through weight reduction of the vehicle body in the prior art, thereby ensuring the driving safety of the vehicle.

In sum, the present invention provides a translational active diffuser for vehicle that improves aerodynamic performance of the entire vehicle, ensures the driving safety of the vehicle, reduces fuel consumption and CO₂ emissions and has both practical and aesthetic functions.

### Brief Description of the Drawings

FIG. 1 is a schematic illustration of a mounting position of a translational active diffuser for vehicle on an entire vehicle according to a preferred embodiment of the present invention;
FIG. 2 is a partial schematic exploded view of the translational active diffuser for vehicle;
FIG. 3 is an overall schematic exploded view of the translational active diffuser for vehicle shown in FIG. 2;
FIG. 4 is a top view of the translational active diffuser for vehicle;
FIG. 4A is a sectional view along a section line A-A in FIG. 4;
FIG. 4B is a sectional view along a section line B-B in FIG. 4;
FIG. 5 is a schematic illustration of assembling guide rail upper supports and guide rail lower supports;
FIG. 5A is a sectional view along a section line M-M in FIG. 5;
FIG. 6 is a top view of the translational active diffuser for vehicle;
FIG. 6A is a sectional view along a section line N-N in FIG. 6;
FIG. 7A is a front view of the translational active diffuser for vehicle; and
FIG. 7B is a top view of the translational active diffuser for vehicle.

### Detailed Description of Preferred Embodiments

The present invention is further described below with reference to specific embodiments. It should be understood that, the following embodiments are merely used to illustrate the present invention, but are not intended to limit the scope of the present invention.

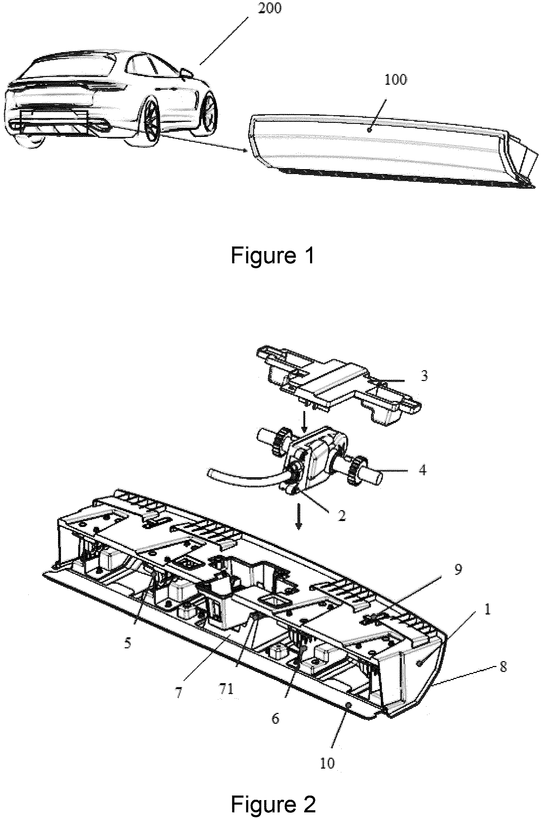

As shown is FIG. 1, a translational active diffuser 100 for vehicle according to a preferred embodiment of the present invention is mounted at the rear of a vehicle 200. The diffuser 100 improves aerodynamic performance of the entire vehicle in a high-speed running state, and also ensures the streamline of the bottom of the entire vehicle in a non-running state.

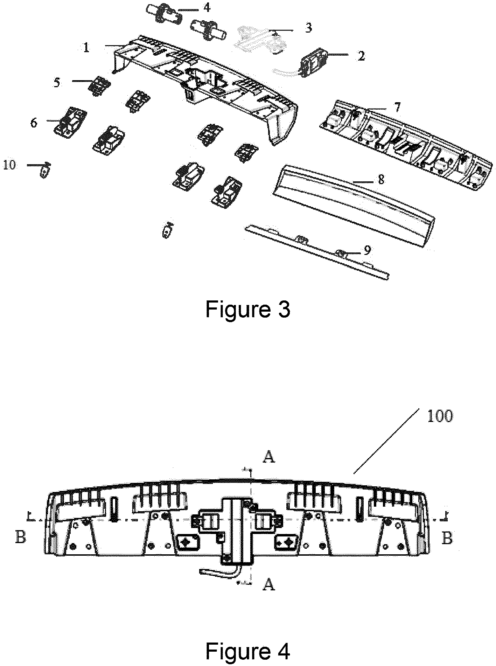

With reference to FIG. 2 and FIG. 3, the translational active diffuser for vehicle 100 mainly includes: a diffuser bracket 1, an electrical motor 2, a cover plate 3 of the electrical motor, a gear 4, guide rail upper supports 5, guide rail lower supports 6, an inner plate 7 of the diffuser, an outer plate 8 of the diffuser, T-shaped plates 9 and a fender 10. The diffuser bracket 1 is immovably fixed relative to the body of the vehicle 200. The electrical motor 2 is mounted on the diffuser bracket 1 by means of the cover plate 3 of the electrical motor. The gear 4 is connected to and driven by the electrical motor 2. The guide rail upper supports 5 are mounted on the diffuser bracket 1, and the guide rail lower supports 6 are mounted on the inner plate 7 of the diffuser, to realize a connection between the diffuser inner plate 7 and the diffuser bracket 1. The outer plate 8 of the diffuser is mounted on an outer side of the diffuser inner plate 7.

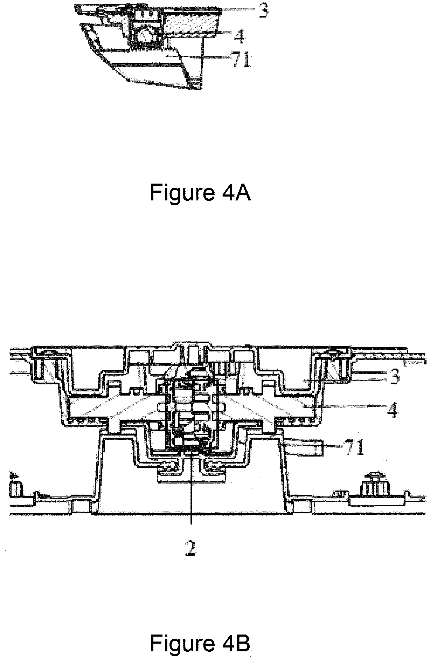

Specifically, as shown in FIG. 4, FIG. 4A and FIG. 4B, the electrical motor 2 and the gear 4 are mounted on the diffuser bracket 1, and fastened by means of the cover plate 3, to protect the electrical motor. The diffuser inner plate 7 is provided with a rack 71 meshing with the gear 4. Therefore, when rotating in a counterclockwise direction under the driving of the electrical motor 2, the gear 4 correspondingly drives the rack 71 to go back, so as to realize a translational opening of the diffuser inner plate 7 toward the rear of the vehicle and relative to the diffuser bracket 1, and thus form an airflow channel for air to flow between the diffuser inner plate 7 and the diffuser bracket 1. On the contrary, when rotating in a clockwise direction, the gear 4 correspondingly drives the rack 71 to go forward, so as to realize a translational closing of the diffuser inner plate 7 toward the front of the vehicle and relative to the diffuser bracket 1, and then close the airflow channel between the diffuser inner plate 7 and the diffuser bracket 1.

According to a preferred embodiment of the present invention, there are two driving manners of the electrical motor 2. One manner is to manually manipulate an input signal to enable the electrical motor to work. The other manner is that the electrical motor is automatically turned on when a speed sensor detects that a vehicle speed exceeds a particular value (for example, 120 KPH), and automatically turned off when the vehicle speed is inferior to the particular value.

With reference to FIG. 2, FIG. 3, FIG. 5 and FIG. 5A, according to this preferred embodiment, a manner of engagement and fitting of upper and lower guide rails is used to realize the translation motion of the diffuser inner plate 7. Specifically, four guide rail upper supports 5 are mounted on the diffuser bracket 1, and four guide rail lower supports 6 are mounted on the diffuser inner plate 7. The guide rail upper supports 5 form a first C-shaped structure having a C-shaped cross sectional shape, and the guide rail lower supports 6 form a second C-shaped structure embedded in the first C-shaped structure and capable of sliding along the first C-shaped structure. The active diffuser 100 realizes, through the cooperation of the first C-shaped structure and the second C-shaped structure, the translation motion of the diffuser inner plate 7 relative to the diffuser bracket 1. However, it should be understood that, quantities of the guide rail upper supports and the guide rail lower supports may be correspondingly adjusted according to a specific situation, and are not limited to the quantities shown in the figures.

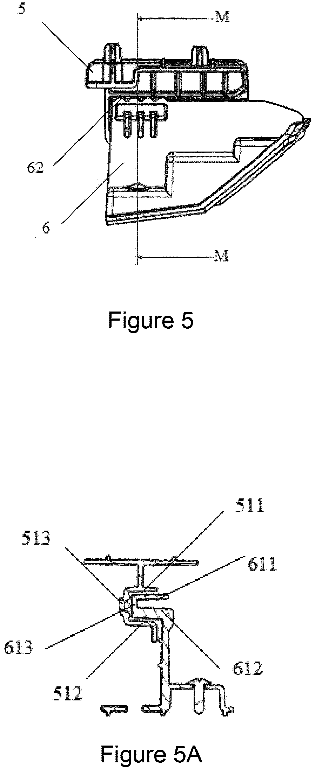

According to this preferred embodiment, as shown in FIG. 5A, the first C-shaped structure includes a first upper wall 511 and a first lower wall 512 that extend in parallel, and a first side wall 513 connecting the first upper wall 511 and the first lower wall 512. The second C-shaped structure includes a second upper wall 611 and a second lower wall 612 that extend in parallel, and a second side wall 613 connecting the second upper wall 611 and the second lower wall 612. Preferably, on matching surfaces of the second upper wall 611 and the second lower wall 612 that match with the first C-shaped structure are further provided ribs 62, to reduce friction of relative motion.

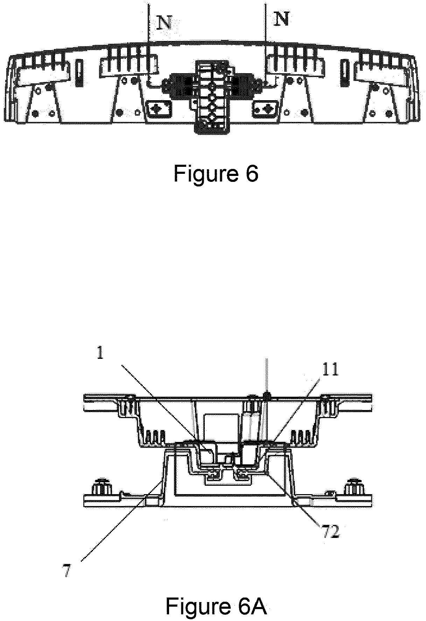

With reference to FIG. 6 and FIG. 6A, according to this preferred embodiment, the diffuser bracket 1 is provided with slots 11. The diffuser inner plate 7 is provided with lugs 72 embedded into the slots 11 and capable of sliding along the slots 11. Preferably, as shown in FIG. 6A, the slots 11 are arranged in pairs on the diffuser bracket 1, and the lugs 72 are also arranged symmetrically on the diffuser inner plate 7, so as to further effectively ensure an interaction between the diffuser inner plate 7 and the diffuser bracket 1, and enable the gear 4 to effectively meshing with the rack 71.

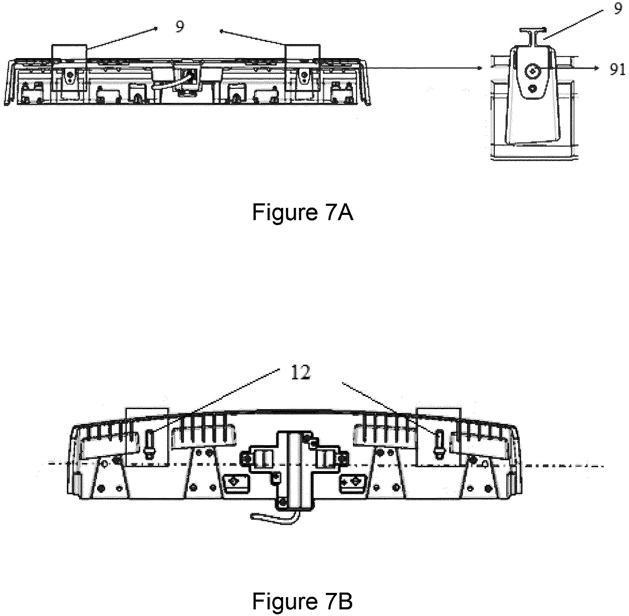

With reference to FIG. 7A and FIG. 7B, according to this preferred embodiment, the T-shaped plates 9 are mounted on a top of the diffuser inner plate 7 by using screws 91, and extend out of limiting holes 12 on the diffuser bracket 1. The limiting holes 12 extend in the length direction of the vehicle body, that is, a moving direction of the diffuser inner plate 7. When the diffuser inner plate 7 translates along the length direction of the vehicle body, the T-shaped plates 9 slide and move in the limiting holes 12. It should be understood that, the T-shaped plates 9 can ensure that the diffuser is prevented from being damaged due to an excessive deformation when an external wind load of the vehicle is at a relatively extreme condition.

According to this preferred embodiment, the fender 10 is connected to the diffuser inner plate 7 and carries out synchronous movement with the diffuser inner plate 7, so as to ensure that when the diffuser is in an opening state, dirt is prevented from entering the diffuser to cause a device fault.

According to a preferred embodiment of the present invention, through verification by CAE (Computer Aided Engineering), when the diffuser inner plate translates 30 mm, the active diffuser can better improve aerodynamic performance.

In sum, the translational active diffuser 100 for vehicle according to the foregoing preferred embodiments improves aerodynamic performance of the entire vehicle at a relatively high running speed, reduces fuel consumption and CO₂ emissions to meet the requirements of emission regulations, and has both practical and aesthetic functions. In addition, the hidden danger problem brought about by energy saving and emission reduction gained through weight reduction of the vehicle body in the prior art is avoided.

The foregoing descriptions are merely relatively preferred embodiments of the present invention, but are not intended to limit the scope of the present invention. Various modifications might be further made to the foregoing embodiments of the present invention. Any simple, equivalent modification or embellishment made according to the claims and the content of the specification of the present invention shall fall within the protection scope of the claims of the present invention. What is not described in detail in the present invention belongs to conventional technologies of the art.

## Claims

1. A translational active diffuser for vehicle, comprising a diffuser bracket (1) immovably fixed relative to a vehicle body, an electrical motor (2) fixed on the diffuser bracket and a gear (4) driven by the electrical motor, **characterized in that** the diffuser (100) further comprises a diffuser inner plate (7) provided with a rack (71) meshing with the gear, wherein the diffuser inner plate performs, under the driving of the electrical motor, a translation motion relative to the diffuser bracket along a length direction of the vehicle body, to form an airflow channel for air to flow between the diffuser inner plate and the diffuser bracket.

2. The translational active diffuser for vehicle according to claim 1, further comprising a guiding mechanism which has two parts provided on the diffuser bracket (1) and the diffuser inner plate (7) relatively, the two parts cooperating with each other to provide a direction guiding for the translation motion.

3. The translational active diffuser for vehicle according to claim 2, wherein the guiding mechanism comprises a guide rail assembly which comprises: a plurality of guide rail upper supports (5) mounted on the diffuser bracket (1), and a plurality of guide rail lower supports (6) mounted on the diffuser inner plate (7).

4. The translational active diffuser for vehicle according to claim 3, wherein the guide rail upper supports (5) form a first C-shaped structure having a C-shaped cross sectional shape, and the guide rail lower supports (6) form a second C-shaped structure embedded into the first C-shaped structure and capable of sliding along the first C-shaped structure.

5. The translational active diffuser for vehicle according to claim 4, wherein on matching surfaces of the first C-shaped structure with the second C-shaped structure are provided ribs (62).

6. The translational active diffuser for vehicle according to any one of claims 2-5, wherein the guiding mechanism comprises slots (11) provided on the diffuser bracket and lugs (72) provided on the diffuser inner plate (7), the lugs being embedded into the slots and capable of sliding along the slots.

7. The translational active diffuser for vehicle according to claim 6, wherein the slots (11) are arranged in pairs on the diffuser bracket (1), and the lugs (72) are arranged symmetrically on the diffuser inner plate (7).

8. The translational active diffuser for vehicle according to any one of claims 2-7, wherein the guiding mechanism comprises T-shaped plates (9) mounted on the diffuser inner plate (7) and limiting holes (12) provided on the diffuser bracket (1), the limiting holes being fitted with the T-shaped plates, and an extension direction of the limiting holes being consistent with a direction of the translation motion.

9. The translational active diffuser for vehicle according to any one of claims 1-8, further comprising a fender (10) assembled on the diffuser inner plate (7), and realizing synchronous movement of the fender with the diffuser inner plate.

10. The translational active diffuser for vehicle according to any one of claims 1-9, further comprising a cover plate (3) of the electrical motor (2), used for mounting the electrical motor on the diffuser bracket (1).
